# EUROPEAN PATENT APPLICATION

(11) **EP 3 933 636 A1**
(43) Date of publication of application: **05.01.2022**
(21) Application number: 19911910.8
(22) Date of filing: 21.06.2019
(51) Int. Cl.: G06F 21/64

(54) **WEBPAGE TAMPERING DETECTION METHOD AND RELATED APPARATUS**

(30) Priority: 25.01.2019 CN 201910075454
(71) Applicant: Sangfor Technologies Inc., Shenzhen, Guangdong 518055 (CN)
(72) Inventor: YANG, Ronghai, Shenzhen, Guangdong 518055 (CN); WANG, Dawei, Shenzhen, Guangdong 518055 (CN); HUANG, Zhiwei, Shenzhen, Guangdong 518055 (CN); HE, Jiawei, Shenzhen, Guangdong 518055 (CN)
(74) Representative: Müller Schupfner & Partner Patent- und Rechtsanwaltspartnerschaft mbB
(86) International application number: PCT/CN2019/092293
(87) International publication number: WO 2020/151173

(57) **Abstract**

A webpage tampering detection method and a related apparatus. The method comprises: first parsing a webpage to be detected to obtain corresponding tag information; performing tampering feature extraction on the tag information to obtain tampering feature information; and performing, by using a deep learning model, calculation on the basis of the tampering feature information to obtain a tampering detection result. In the solution, a deep learning model and tampering feature information in a webpage to be detected are used for webpage tampering detection, and the deep learning model does not perform simple matching in a calculation process and has certain associative ability because the model is trained according to a training sample corresponding to tampering features. Therefore, if tampering feature information is not identical to the trained model, a more accurate detection result can be obtained, thereby improving webpage detection ability.

## Description

This application claims priority to Chinese Patent Application No. 201910075454.8, titled "WEBPAGE TAMPERING DETECTION METHOD AND RELATED APPARATUS", filed on January 25, 2019 with the China National Intellectual Property Administration (CNIPA), which is incorporated herein by reference in its entirety.

### TECHNICAL FIELD

The present disclosure relates to the technical field of networking security, and particularly, to a method, system, and device for detecting webpage tampering, and a computer readable storage medium.

### BACKGROUND

With development of Internet, people are accustomed to obtaining information by browsing webpages provided by various websites. Websites are ranked in search engines. Hacker use black-hat search engine optimization (SEO) to improve ranking of malicious websites. Black-hat SEO refers to using a cheating method to cheat the search engines to illegally improve the ranking of the malicious website in the search engines. Webpage tampering is a common method of black-hat SEO. The hacker invades a number of high-powered legitimate websites, tampers with content of their webpages, inserts malicious text, such as betting advertisements, or inserts malicious links to point to the malicious website. Webpage tampering can increase the ranking of the malicious website in the search engines and obtain more traffic for the malicious website. However, webpage tampering reduces ranking of legitimate websites in the search engines, causes huge economic losses to the legitimate websites, and also affects corporate image.

At present, mainstream security vendors provide detection of webpage tampering, and their detection technology is mainly based on keyword matching. That is, a malicious keyword is pre-determined, then whether there is the malicious keyword in the webpage is detected, and a statistical characteristic and joint probability distribution of the malicious keyword are combined to determine whether the webpage is tampered with.

However, this detection method is relatively simple, unable to deal with uncollected malicious keywords, and has a poor detection capability for a new tampered webpage.

Therefore, how to improve the ability of detecting webpage tampering is a problem that needs to be solved by those skilled in the art.

### SUMMARY

An object of the present disclosure is to provide a method, system, and device for detecting webpage tampering, and a computer readable storage medium, to improve the ability of detecting webpage tampering.

To achieve the above object, a method for detecting webpage tampering is provided in the present disclosure, including:
parsing a to-be-detected webpage to obtain tag information corresponding to the to-be-detected webpage, and taking the tag information as to-be-detected information;
extracting tampering feature information from the to-be-detected information; and
calculating the tampering feature information by using a deep learning model to obtain a tampering detection result of the to-be-detected webpage, wherein the deep learning model is obtained by pre-training on training samples corresponding to the tampering feature information.

In an embodiment, before extracting the tampering feature information from the to-be-detected information, the method further includes:
determining whether text information of the tag information includes a preset sensitive word;
if the text information includes the preset sensitive word, executing the step of extracting the tampering feature information from the to-be-detected information; and
if the text information does not include the preset sensitive word, determining that the tampering detection result of the to-be-detected webpage is the to-be-detected webpage being not tampered with.

In an embodiment, determining whether the text information of the tag information includes the preset sensitive word includes:
matching the text information of the tag information by using a preset rule to determine whether the tag information includes a word that meets the preset rule, wherein the preset rule corresponds to the preset sensitive word, and each preset rule includes a relationship between a core sensitive word and a core sensitive word of the preset sensitive word .

In an embodiment, before matching the text information of the tag information by using the preset rule to determine whether the tag information includes the word that meets the preset rule, the method includes:
determining whether the tag information includes the core sensitive word;
if the tag information includes the core sensitive word, executing the step of matching the text information of the tag information by using the preset rule to determine whether the tag information includes the word that meets the preset rule; and
if the tag information does not include the core sensitive word, determining that the tampering detection result of the to-be-detected webpage is the to-be-detected webpage being not tampered with.

In an embodiment, the tampering feature information includes at least one of:
a result of sentiment analysis on text information of the tag information, a result of semantic analysis on text information of the tag information, a suspiciousness detection result of link information of the tag information, and an expert-presupposed tampering feature.

In an embodiment, calculating the tampering feature information by using the deep learning model to obtain the tampering detection result of the to-be-detected webpage includes:
calculating the tampering feature information by using at least two deep learning models as weak classifiers, to obtain calculation results corresponding to each of the weak classifiers; and
performing ensemble learning on the calculation results to obtain the tampering result of the to-be-detected webpage.

In an embodiment, if there are at least two types of the tampering feature information, the at least two deep learning models comprise:
deep learning models corresponding to each type of the tampering feature information obtained by training on training samples of each type of the tampering feature information;
calculating the tampering feature information by using the at least two deep learning models as the weak classifiers to obtain the calculation results corresponding to each of the weak classifiers comprises:
calculating, by using the at least two deep learning models as the weak classifiers, the tampering feature information corresponding to each of the deep learning models, to obtain the calculation results.

In an embodiment, if there is one type of the tampering feature information, the at least two deep learning models comprise:
deep learning models respectively corresponding to at least two training algorithms obtained by training on the training sample of the tampering feature information using the at least two training algorithms;
calculating the tampering feature information by using the at least two deep learning models as the weak classifiers to obtain the calculation results corresponding to each of the weak classifiers comprises:
calculating the same tampering feature information by using the at least two deep learning models as the weak classifiers to obtain the calculation results corresponding to each of the weak classifiers.

In an embodiment, before extracting the tampering feature information from the to-be-detected information, the method further includes:
obtaining a picture in the to-be-detected webpage; and
identifying text information in the picture, and taking the text information in the picture as the to-be-detected information.

In an embodiment, before extracting the tampering feature information from the to-be-detected information, the method further includes:
parsing and executing JavaScript code in the to-be-detected webpage to jump to a target page corresponding to the JavaScript code; and
parsing the target page to obtain target tag information corresponding to the target page, and taking the target tag information as the to-be-detected information.

To achieve the above object, a system for detecting webpage tampering is further provided in the present disclosure, including:
a to-be-detected webpage parsing module configured to parse a to-be-detected webpage to obtain tag information corresponding to the to-be-detected webpage, and take the tag information as to-be-detected information;
a to-be-detected information feature extraction module configured to extract tampering feature information from the to-be-detected information; and
a calculation module configured to calculate the tampering feature information by using a deep learning model to obtain a tampering detection result of the to-be-detected webpage, wherein the deep learning model is obtained by pre-training on training samples corresponding to the tampering feature information.

In an embodiment, the system further includes:
a preset sensitive word detection module configured to determine whether text information of the tag information includes a preset sensitive word; if the text information includes the preset sensitive word, start the workflow corresponding to the to-be-detected information feature extraction module; if the text information does not include the preset sensitive word, determine that the tampering detection result of the to-be-detected webpage is the to-be-detected webpage being not tampered with.

In an embodiment, the preset sensitive word detection module is configured to match the text information of the tag information by using a preset rule to determine whether the tag information includes a word that meets the preset rule,
wherein the preset rule corresponds to the preset sensitive word, and each preset rule includes a relationship between a core sensitive word and a core sensitive word of the preset sensitive word.

In an embodiment, the system further includes:
a core sensitive word detection module configured to determine whether the tag information includes the core sensitive word; if the tag information includes the core sensitive word, start the workflow corresponding to the preset sensitive word detection module; if the tag information does not include the core sensitive word, determine that the tampering detection result of the to-be-detected webpage is the to-be-detected webpage being not tampered with.

In an embodiment, the calculation module includes:
a calculation unit configured to calculate the tampering feature information by using at least two deep learning models as weak classifiers, to obtain calculation results corresponding to each of the weak classifiers; and
an ensemble learning unit configured to perform ensemble learn on the calculation results to obtain the tampering result of the to-be-detected webpage.

In an embodiment, if there are at least two types of the tampering feature information, the at least two deep learning models comprises:
deep learning models corresponding to each type of the tampering feature information obtained by training on training samples of each type of the tampering feature information,
the calculation unit is configured to calculate, by using the at least two deep learning models as the weak classifiers, the tampering feature information corresponding to each of the deep learning models, to obtain the calculation results.

In an embodiment, if there are at least two types of the tampering feature information, the at least two deep learning models comprise:
deep learning models respectively corresponding to at least two training algorithms obtained by training on the training sample of the tampering feature information using the at least two training algorithms,
the calculation unit is configured to calculate the same tampering feature information by using the at least two deep learning models as the weak classifiers to obtain the calculation results corresponding to each of the weak classifiers.

In an embodiment, the system further includes:
a picture obtaining module configured to obtain a picture in the to-be-detected webpage; and
a picture text information identification module configured to identify text information in the picture, and take the text information in the picture as the to-be-detected information.

To achieve the above object, a device for detecting webpage tampering is further provided in the present disclosure, including:
a memory configured to store a computer program; and
a processor configured to execute the computer program to implement the steps of any one of the above methods for detecting webpage tampering.

To achieve the above object, a computer-readable storage medium is further provided in the present disclosure, the computer-readable storage medium stores a computer program that, when executed by a processor, implements the steps of any one of the above methods for detecting webpage tampering.

From the above we can be seen that the method for detecting webpage tampering provided by the present disclosure includes: parsing a to-be-detected webpage to obtain tag information corresponding to the to-be-detected webpage, and taking the tag information as to-be-detected information; extracting tampering feature information from the to-be-detected information; and calculating the tampering feature information by using a deep learning model to obtain a tampering detection result of the to-be-detected webpage, wherein the deep learning model is obtained by pre-training on training samples corresponding to the tampering feature information.

It can be seen that the method for detecting webpage tampering provided by the present disclosure first parses the to-be-detected webpage to obtain the tag information corresponding to the to-be-detected webpage, extracts the tampering features from the tag information to obtain the tampering feature information, and calculates the tampering feature information by using the deep learning model to obtain the tampering detection result. Since this solution uses the deep learning model and the tampering feature information in the to-be-detected webpage to perform tamper detection on the webpage, and the deep learning model is a model trained based on the training sample corresponding to the tamper features, this solution is not a simple match in the calculation process, but has a certain association ability. When the tampering feature information is not exactly the same as the training model, an accurate detection result can also be obtained, thereby improving webpage detection ability.

### BRIEF DESCRIPTION OF THE DRAWINGS

In order to more clearly explain the embodiments of the present invention or the technical solutions in the prior art, the drawings used in the description of the embodiments or the prior art will be briefly introduced below. Obviously, the drawings in the following description are merely some embodiments of the present disclosure. For those of ordinary skill in the art, other drawings can be obtained according to the provided drawings without paying creative labor.
Figure 1 is a flow chart of a method for detecting webpage tampering according to an embodiment of the present disclosure;
Figure 2 is a flow chart of a specific method for detecting webpage tampering according to an embodiment of the present disclosure;
Figure 3 is a flow chart of a specific method for detecting webpage tampering according to an embodiment of the present disclosure;
Figure 4 is a flow chart of a specific method for detecting webpage tampering according to an embodiment of the present disclosure;
Figure 5 is a structural diagram of a system for detecting webpage tampering according to an embodiment of the present disclosure; and
Figure 6 is a structural diagram of a device for detecting webpage tampering according to an embodiment of the present disclosure.

### DETAILED DESCRIPTION

The technical solutions in the embodiments of the present application will be described clearly and completely hereinafter in conjunction with the drawings in the embodiments of the present application. Apparently, the described embodiments are only a part of the embodiments of the present application, rather than all embodiments. Based on the embodiments in the present application, all of other embodiments, made by the person skilled in the art without any creative efforts, fall into the scope of the present application.

A method, system, and device for detecting webpage tampering, and a computer readable storage medium are disclosed in the embodiments of the present disclosure, to solve the problem of how to improve an ability of detecting webpage tampering.

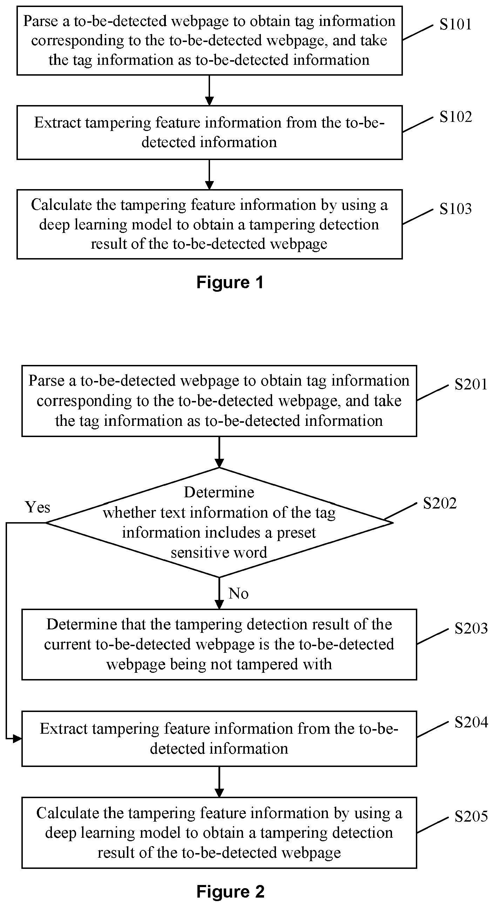

With reference to Figure 1, a method for detecting webpage tampering provided in an embodiment of the present disclosure includes steps S101 to S103.

In step S101, a to-be-detected webpage is parsed to obtain tag information corresponding to the to-be-detected webpage, and the tag information is taken as to-be-detected information.

Specifically, the to-be-detected webpage is first determined, and the tag information in the to-be-detected webpage is parsed, and the tag information is taken as the to-be-detected information.

It should be noted that a webpage is actually hypertext markup language (HTML). For a HTML webpage, multiple tags are used to define different information. For example, tag <title> defines a title of a document, and tag <link> defines a relationship between a document and external resource.

In this step, document object model DOM structure of the webpage needs to be parsed first, and the tag information such as title, hyperlink, and text are extracted. It should be noted that DOM may access and modify content and structure of a document in a way that is independent from platform and language. In other words, DOM is a common method for representing and processing an HTML or XML document.

In step S102, tampering feature information is extracted from the to-be-detected information.

Specifically, the tampering feature information is extracted in a detection information center, and the tampering feature information is feature information used to identify the webpage being tampered with.

In this solution, in order to make the detection more comprehensive and make the detection result more reliable, it is preferable to extract at least two types of tampering feature information from the to-be-detected information, that is, to extract multi-dimensional feature information for subsequent detection.

In step S103, the tampering feature information is calculated by using a deep learning model to obtain a tampering detection result of the to-be-detected webpage, the deep learning model is obtained by pre-training on training samples corresponding to the tampering feature information.

In this solution, a training model corresponding to the tampering feature information is determined in advance, and deep learning training is performed on the model to obtain the deep learning model. Then, the deep learning model is used to calculate the tampering feature information to obtain the webpage detection result.

In a preferred embodiment, in order to make the detection result more accurate, calculating the tampering feature information by using the deep learning model to obtain the tampering detection result of the to-be-detected webpage includes:
calculating the tampering feature information by using at least two deep learning models as weak classifiers, to obtain calculation results corresponding to each of the weak classifiers; and
performing ensemble learning on the calculation results to obtain the tampering result of the to-be-detected webpage.

In this solution, at least two deep learning models are used as the weak classifiers for ensemble learning, so that at least two deep learning models are used to calculate the tampering feature information extracted in the above steps, and calculation effects of each deep learning model may be integrated, to comprehensively determine a tampering status of the to-be-detected webpage, so that an accuracy of the detection is improved.

In addition, each deep learning model needs to avoid a problem of overfitting when training, that is, avoid the model from using too many parameters to be too complicated, so as to avoid that the model only applies to current training data, but cannot apply to other data. The model in the solution includes at least two deep learning models. Even if one of deep learning models has the problem of overfitting, the other deep learning model that does not have the overfitting problem may alleviate the overfitting of the entire model, which may ignore the problem of overfitting of the single weak classifier to a large extent and make the generalization ability of the entire model higher, that is, make the entire model easier to adapt to different data.

It should be noted that ensemble learning is a machine learning method that uses a series of learners to learn, and uses a certain rule to integrate various learning results to obtain a better learning effect than a single learner.

In this solution, ensemble learning are performed on the calculation results obtained by each of the deep learning models, and the calculation effects of each of the deep learning models are integrated, so that the accuracy of the entire detection result is high. It should be noted that a specific rule for integrating the calculation results of each of the deep learning models is not specifically limited in this solution.

Since there are at least two deep learning models, the deep learning models may be obtained by training for each feature, that is, one feature corresponds to one deep learning model. Alternatively, at least two algorithms are used to train on all features to obtain a weak classifier corresponding to each algorithm, that is, one algorithm corresponds to one deep learning model.

Therefore, in a specific implementation, if there are at least two types of the tampering feature information, the at least two deep learning models include:
deep learning models corresponding to each type of the tampering feature information obtained by training on training samples of each type of the tampering feature information;
correspondingly, calculating the tampering feature information by using the at least two deep learning models as the weak classifiers to obtain the calculation results corresponding to each of the weak classifiers includes:
   calculating, by using the at least two deep learning models as the weak classifiers, the tampering feature information corresponding to each of the deep learning models, to obtain the calculation results. In this solution, the training samples of each of the deep learning models are consistent with each type of the tampering feature, that is to say, one deep learning model corresponds to one type of tampering feature information. When there are multiple types of tampering feature information, there are multiple corresponding deep learning models. In calculating, the deep learning model corresponding to the tampering feature information is used to calculate the corresponding tampering feature information, so for each type of the tampering feature information, since the deep learning model is trained for the tampering feature information itself, it is more suitable that the deep learning model calculates the tampering feature information itself, so an accuracy of the calculation is relatively high. Similarly, since it is necessary to combine the multiple types of the tampering feature information to make a more comprehensive decision on the tampering detection result of the current to-be-detected webpage, it is necessary to perform ensemble learning on the calculation results calculated by each of the deep learning models to obtain the final tampering result.

It should be noted that in this solution, when training on the training data of each type of tampering feature, the same algorithm may be used, or different algorithms may be used.

In another specific embodiment, if there is one type of the tampering feature information, the at least two deep learning models includes:
deep learning models respectively corresponding to at least two training algorithms obtained by training on the training sample of the tampering feature information using the at least two training algorithms;
correspondingly, calculating the tampering feature information by using the at least two deep learning models as the weak classifiers to obtain the calculation results corresponding to each of the weak classifiers includes:
   calculating the same tampering feature information by using the at least two deep learning models as the weak classifiers to obtain the calculation results corresponding to each of the weak classifiers.

In this solution, the training samples corresponding to the tampering feature information are determined, and different algorithms, such as TextCNN, SVM, are used to separately train on the training samples to obtain deep learning models corresponding to different algorithms. Because each algorithm has its own advantages and shortcomings, different deep learning models corresponding to different algorithms are used to calculate all the tampering feature information, and then ensemble learning is performed on all the calculation results, therefore a more accurate tampering detection result of the to-be-detected webpage can be comprehensively obtained by learning widely from others' strong points.

It should be noted that the tamper detection result is generally a percentage of tampering degree. The form of the tampering result may be determined according to the specific weak classifier, which is not specifically limited in this solution.

It can be seen that the method for detecting webpage tampering provided by the present disclosure first parses the to-be-detected webpage to obtain the tag information corresponding to the to-be-detected webpage, extracts the tampering feature from the tag information to obtain the tampering feature information, and calculates the tampering feature information by using the deep learning model to obtain the tampering detection result. Since this solution uses the deep learning model and the tampering feature information in the to-be-detected webpage to perform tamper detection on the webpage, and the deep learning model does not perform a simple match in the calculation process, but has a certain associative ability according to the training features. Therefore when the tampering feature information is not exactly the same as the training model, the more accurate detection result may also be obtained, thereby improving the webpage detection ability.

On the basis of the foregoing embodiment, an embodiment further illustrates and optimizes the technical solution, which is specifically as follows.

In the foregoing embodiment, the at least two tampering feature information includes at least one of:
a result of sentiment analysis on text information of the tag information, a result of semantic analysis on text information of the tag information, a suspiciousness detection result of link information of the tag information, and an expert-presupposed tampering feature.

It should be noted that webpage tampering often relate to inserting malicious text into the webpage. Therefore, the present disclosure uses sentiment analysis technology in natural language processing (NLP) to check whether the webpage contains malicious text. Specifically, it may be determined according to the tag information whether text in each tag information contains illegal or negative content, such as a betting advertisement. Furthermore, the present disclosure may also use sentiment analysis to determine overall maliciousness of the text of the webpage, that is, the text of the entire webpage is used as a unit of the to-be-detected text to detect the malicious text. Therefore, a result of sentiment analysis may include distribution statistics of malicious text in each tag, such as how many malicious texts in each tag has, or a probability of malicious text in the entire webpage. A result which should be used as the tampering feature information is not limited in this solution.

Due to diversity of customers, some customer websites are prone to misreporting by their own businesses. For example, a Welfare Lottery website contains sensitive information such as double chromosphere and Lottery, which is easily to be misreported by a traditional engine. Therefore, in this solution, the tampering feature information also includes the result of semantic analysis on the text of the tag information. In this solution, a correlation between the text in the tag information and a theme of the website is determined, thereby greatly reducing a business misreport. A method of determining the correlation is not specifically limited in this solution, and may be determined according to actual situation. For example, a sensitive word of the text information in the tag information may be mapped to a word vector, and the theme of the website may be determined and mapped to a vector. By determining a distance between the sensitive word vector and the theme vector, whether the sensitive word is a business of the current webpage can be determined, thereby avoiding misreport. Therefore, in this solution, the tampering feature information may include the number of suspicious text, a statistic of distance between the suspicious text and the sensitive word, a statistic of distance between the suspicious text and the website theme, and the like.

In this solution, a link in the webpage may be also detected. A hacker tampering with the website may not only insert malicious text but also a malicious link into the web pages. Therefore, in order to detect more comprehensively, the tampering feature information may also include link-related information. Therefore, a large amount of text feature information of normal domains and malicious domains may be learned by a model in advance, and then whether the link in the current webpage is a malicious link may be determined by the link situation in the webpage determined by the trained model and network association situation of the link, that is, whether the link is also used as an external link by other normal websites. Therefore, in this solution, the tampering feature information may include statistic of the suspicious link, degree of suspiciousness of the suspicious link, and a tag appeared in the suspicious link.

In this solution, some tampering feature information may be preset based on knowledge of an expert in the security field.

Anti-detection techniques may also be used for tampering, such as use of ultra-small fonts that are invisible to a naked eye, use of a special code or color. Therefore, the DOM structure of the to-be-detected webpage may be parsed to determine whether there is an abnormal behavior in a source code that can present the above anti-detection effect. Whether there is an abnormal behavior is taken as the tampering feature information.

In addition, the anti-detection technology may also use abnormal coding. For example, when viewing a source code of a normal webpage, a text can be directly seen. In order to hide malicious content, the malicious text uses a technology such as HTML encoding to encode the text into some numbers that cannot be understood by human eyes. This HTML encoding may be considered as abnormal encoding. Therefore, this solution may parse the DOM structure of the to-be-detected webpage to determine whether there is an abnormal code in the source code, and whether there is an abnormal code is taken as the tampering feature information.

The following describes a specific method for detecting webpage tampering provided according to an embodiment of the present disclosure. The specific method for detecting webpage tampering described below may be cross-referenced with any of the foregoing embodiments.

With reference to Figure 2, a specific method for detecting webpage tampering provided according to an embodiment of the present disclosure includes steps S201 to S205.

In step S201, a to-be-detected webpage is parsed to obtain tag information corresponding to the to-be-detected webpage, and the tag information is taken as to-be-detected information.

In step S202, whether text information of the tag information includes a preset sensitive word is determined, S204 is performed if the text information includes the preset sensitive word and otherwise S203 is performed.

If there are a large number of to-be-detected webpages, it is necessary to filter out webpages that have not been tampered with in this solution in order to improve overall detection efficiency.

Webpages that have not been tampered with usually do not contain sensitive words. Therefore, in this solution, it is first detected whether the text information of the tag information of the to-be-detected webpage includes a preset sensitive word. If so, S204 is performed for further tampering detection, and if not, it is directly determined that the webpage is not tampered with, and no subsequent steps are performed to save time.

In a preferred embodiment, a preset rule is used to match the text information of the tag information to determine whether the tag information includes a word that meets the preset rule. The preset rule corresponds to the preset sensitive word. Each preset rule includes a relationship between a core sensitive word and a core sensitive word of the preset sensitive word.

It should be noted that if a traditional keyword matching algorithm is used to determine whether the text information of the tag information includes the preset sensitive word, that is, the traditional keyword matching algorithm is used to match the text information with the preset sensitive word, for example, a multi-mode string matching algorithm is used for matching, the keyword has a poor anti-interference ability and is easy to be bypassed. For example, the preset sensitive word is "casino gaming". When order of words in the keyword is reversed in the text information, such as "gambling casino", or when other word or character is added between two words in the text such as "gambling in casino", then it cannot be able to match the text information to the preset sensitive word, which leads to a loophole in the detection.

Therefore, in this solution, there are one or more rules corresponding to each preset sensitive word. For example, corresponding to one preset sensitive word, the rule is to allow core sensitive words of the preset sensitive word to reverse order and allow other character to be inserted between the core sensitive words. It should be noted that the core sensitive words are core words of the preset sensitive word. For example, the preset sensitive word is "casino gaming", and the core sensitive words are "casino" and "gambling".

In a specific implementation, a way for determining the core sensitive words may be to perform word segmentation processing on the preset sensitive word to obtain the corresponding core sensitive words. It may also be to obtain the core sensitive words through collection in a webpage.

If the core sensitive words are collected from the webpage, it may include but is not limited to following way:
collecting a large number of normal webpages and tampered webpages; performing word segmentation on the webpages, and counting probability f1 of each word appearing in the tampered webpages and probability f2 of each word appearing in the normal webpages. If a difference d=f1-f2 is greater than a preset threshold, the word is determined to be a core sensitive word.

Since each preset sensitive word corresponds to one or more rules, using rules to determine whether current text is the preset sensitive word consumes more time and computing resources than directly determining whether the text is the same as the preset sensitive word. Therefore, in this solution, a preferred embodiment is provided that before matching the text information of the tag information by using the rule corresponding to the preset sensitive word to determine whether the tag information includes a word that meets the rule corresponding to the preset sensitive word, the method further includes:
determining whether the tag information includes the core sensitive word;
if the tag information includes the core sensitive word, executing the step of matching the text information of the tag information by using the rule corresponding to the preset sensitive word to determine whether the tag information includes the word that meets the rule corresponding to the preset sensitive word;
if the tag information does not include the core sensitive word, determining that the tampering detection result of the to-be-detected webpage is the to-be-detected webpage being not tampered with.

In this solution, it is first determined that whether the tag information includes the core sensitive word, that is, traditional keyword matching is first performed, to determine whether the text in the current tag information has the core sensitive word. If the core sensitive word is included, then subsequent steps are performed. If the core sensitive word is not included, it is directly determined that the tampering result of the current to-be-detected webpage is the current to-be-detected webpage being not tampered with.

In step S203, it is determined that the tampering result of the to-be-detected webpage is the to-be-detected webpage being not tampered with.

In step S204, tampering feature information is extracted from the to-be-detected information.

In step S205, the tampering feature information is calculated by using a deep learning model to obtain a tampering detection result of the to-be-detected webpage, the deep learning model is obtained by pre-training on training samples corresponding to the tampering feature information.

Steps S204 and S205 have been described in the above embodiment, and are not repeated here.

The following describes a specific method for detecting webpage tampering provided according to an embodiment of the present disclosure. The specific method for detecting webpage tampering described below may be cross-referenced with any of the foregoing embodiments.

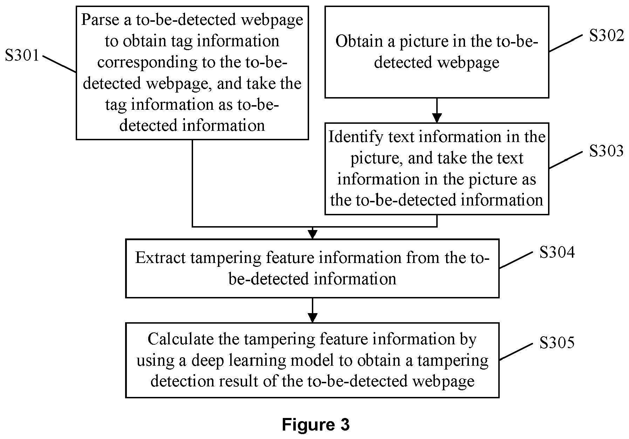

With reference to Figure 3, the specific method for detecting webpage tampering provided according to the embodiment of the present disclosure includes steps S301 to S305.

In step S301, a to-be-detected webpage is parsed to obtain tag information corresponding to the to-be-detected webpage, and the tag information is taken as to-be-detected information.

In step S302, a picture in the to-be-detected webpage is obtained.

In step S303, text information in the picture is identified, and the text information in the picture is taken as the to-be-detected information.

It should be noted that picture tampering is another type of webpage tampering, that is, inserting a malicious picture into the invaded webpage, and information in the picture cannot be directly detected by the above-mentioned text-based tampering detecting method, so in this solution, the picture in the to-be-detected webpage is first obtained, then the picture is recognized to extract text information in the picture, and the text information in the picture is taken as the to-be-detected information, and then the subsequent detection steps are performed. It should be noted that a related technology related to image recognition has been relatively mature in the prior art, such as optical character recognition (OCR) technology, therefore, it is not described in detail in this solution.

Therefore, this solution can also detect image tampering.

In step S304, tampering feature information is extracted from the to-be-detected information.

In step S305, the tampering feature information is calculated by using a deep learning model to obtain a tampering detection result of the to-be-detected webpage, the deep learning model is obtained by pre-training on training samples corresponding to the tampering feature information. Steps S301, S304, and S305 have been described in the above embodiment, and will not be repeated here.

The following describes a specific method for detecting webpage tampering provided according to an embodiment of the present disclosure. The specific method for detecting webpage tampering described below may be cross-referenced with any of the foregoing embodiments.

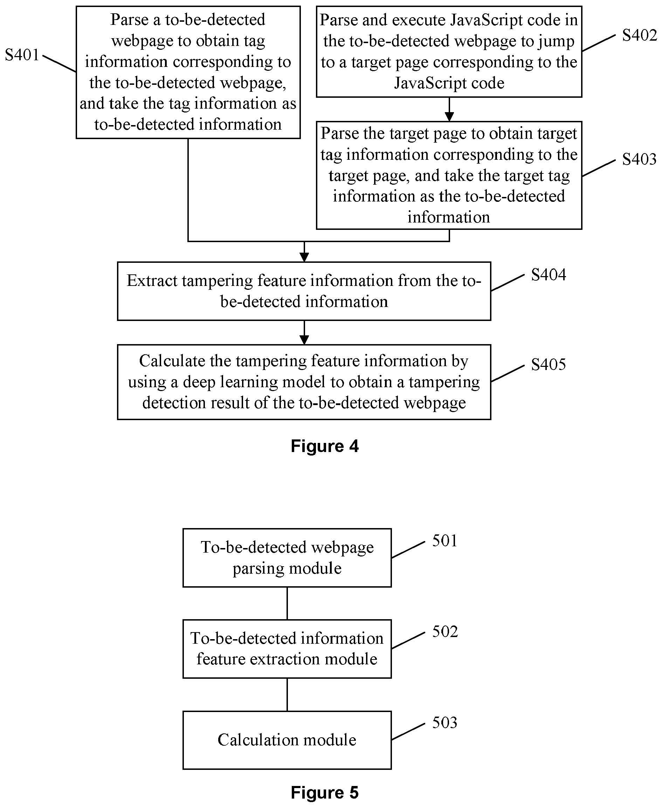

With reference to Figure 4, the specific method for detecting webpage tampering provided according to the embodiment of the present disclosure includes steps S401 to S405.

In step S401, a to-be-detected webpage is parsed to obtain tag information corresponding to the to-be-detected webpage, and the tag information is taken as to-be-detected information.

In step S402, JavaScript code in the to-be-detected webpage is parsed and executed to jump to a target page corresponding to the JavaScript code.

In step S403, the target page is parsed to obtain target tag information corresponding to the target page, and the target tag information is taken as the to-be-detected information.

It should be noted that in a HTML webpage, in addition to text information, link information, and picture information, there may also be JavaScript code. The JavaScript code being loaded by a user's browser may be directed to another webpage. If the JavaScript code is malicious code, it jumps to the malicious webpage when the code is loaded.

Therefore, in order to detect such tampering in this solution, the JavaScript code in the to-be-detected webpage needs to be parsed and executed, so as to jump to the target page corresponding to the code, and then the target tag information of the target page is parsed and taken as the to-be-detected information, then the subsequent tampering detection steps are performed, so that the tampering of the JavaScript code of the to-be-detected webpage can be detected, and the detection is more comprehensive and the detection result is more accurate.

It should be noted that the present disclosure is not limited to JavaScript code, but also other codes with an effect of jumping a page.

In step S404, tampering feature information is extracted from the to-be-detected information.

In step S405, the tampering feature information is calculated by using a deep learning model to obtain a tampering detection result of the to-be-detected webpage, the deep learning model is obtained by pre-training on training samples corresponding to the tampering feature information. Steps S401, S404, and S405 have been described in the above embodiment, and will not be repeated here. The following describes a system for detecting webpage tampering provided according to an embodiment of the present disclosure. The system for detecting webpage tampering described below may be cross-referenced with any of the foregoing embodiments.

With reference to Figure 5, the system for detecting webpage tampering provided according to the embodiment of the present disclosure includes a to-be-detected webpage parsing module 501, a to-be-detected information feature extraction module 502, and a calculation module 503.

The to-be-detected webpage parsing module 501 is configured to parse a to-be-detected webpage to obtain tag information corresponding to the to-be-detected webpage, and take the tag information as to-be-detected information.

The to-be-detected information feature extraction module 502 is configured to extract tampering feature information from the to-be-detected information.

The calculation module 503 is configured to calculate the tampering feature information by using a deep learning model to obtain a tampering detection result of the to-be-detected webpage, the deep learning model is obtained by pre-training on training samples corresponding to the tampering feature information.

In an embodiment, the system further includes a preset sensitive word detection module.

The preset sensitive word detection module is configured to determine whether text information of the tag information includes a preset sensitive word; if the text information includes the preset sensitive word, start the workflow corresponding to the to-be-detected information feature extraction module 502; if the text information does not include the preset sensitive word, determine that the tampering detection result of the to-be-detected webpage is the to-be-detected webpage being not tampered with.

In an embodiment, the preset sensitive word detection module is specifically configured to match the text information of the tag information by using a preset rule to determine whether the tag information includes a word that meets the preset rule.

The preset rule corresponds to preset sensitive word, and each preset rule includes a relationship between a core sensitive word and a core sensitive word of the preset sensitive word.

In an embodiment, the system further includes a core sensitive word detection module.

The core sensitive word detection module is configured to determine whether the tag information includes the core sensitive word; if the tag information includes the core sensitive word, start the workflow corresponding to the preset sensitive word detection module; if the tag information does not include the core sensitive word, determine that the tampering detection result of the to-be-detected webpage is the to-be-detected webpage being not tampered with.

In an embodiment, the tampering feature information includes at least one of:
a result of sentiment analysis on text information of the tag information, a result of semantic analysis on text information of the tag information, a suspiciousness detection result of link information of the tag information, and an expert-presupposed tampering feature.

In an embodiment, the calculation module 503 includes a calculation unit, and an ensemble learning unit.

The calculation unit is configured to use at least two deep learning models as weak classifiers to calculate the tampering feature information to obtain calculation results corresponding to each of the weak classifiers.

The ensemble learning unit is configured to perform ensemble learning on the calculation results to obtain the tampering result of the to-be-detected webpage.

In an embodiment, if there are at least two types of the tampering feature information, the at least two deep learning models include:
deep learning models corresponding to each type of the tampering feature information obtained by training on training samples of each type of the tampering feature information.

Correspondingly, the calculation unit is specifically configured to calculate, by using the at least two deep learning models as the weak classifiers, the tampering feature information corresponding to each of the deep learning models, to obtain the calculation results.

In an embodiment, if there are at least two types of the tampering feature information, the at least two deep learning models include:
deep learning models respectively corresponding to at least two training algorithms obtained by training on the training sample of the tampering feature information using the at least two training algorithms.

Correspondingly, the calculation unit is specifically configured to calculate the same tampering feature information by using the at least two deep learning models as the weak classifiers to obtain the calculation results corresponding to each of the weak classifiers.

In an embodiment, the system further includes a picture obtaining module and a picture text information identification module.

The picture obtaining module is configured to obtain a picture in the to-be-detected webpage.

The picture text information identification module is configured to identify text information in the picture, and take the text information in the picture as the to-be-detected information.

In an embodiment, the system further includes a code parsing module and a target page parsing module.

The code parsing module is configured to parse and execute JavaScript code in the to-be-detected webpage to jump to a target page corresponding to the JavaScript code.

The target page parsing module is configured to parse the target page to obtain target tag information corresponding to the target page, and take the target tag information as the to-be-detected information.

The system for detecting webpage tampering in this embodiment is configured to implement the aforementioned method for detecting webpage tampering. Therefore, specific implementations of the system for detecting webpage tampering may refer to the previous embodiment of the method for detecting webpage tampering, for example, the to-be-detected webpage parsing module 501, the to-be-detected information feature extraction module 502, the first calculation module 503, and the second calculation module 504 are respectively used to implement steps S101, S102, S103 and S104 in the above method for detecting webpage tampering. For specific implementations, reference may be made to the descriptions of the respective embodiments, which are not repeated here.

The following describes a device for detecting webpage tampering provided according to an embodiment of the present disclosure. The device for detecting webpage tampering described below may be cross-referenced with any of the foregoing embodiments.

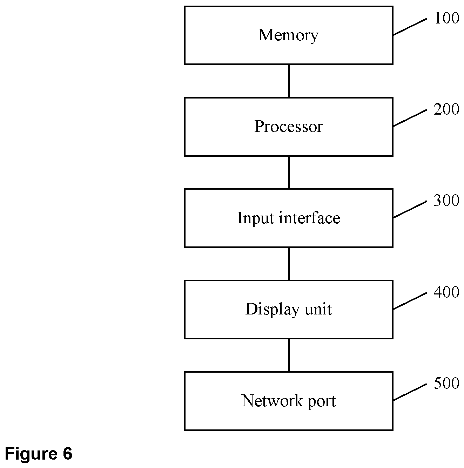

With reference to Figure 6, the device for detecting webpage tampering provided according to the embodiment of the present disclosure specifically includes a memory 100 and a processor 200.

The memory 100 is configured to store a computer program.

The processor 200 is configured to execute the computer program to implement the steps of any one of the method for detecting webpage tampering.

Specifically, the memory 100 includes a non-volatile storage medium and an internal memory. The non-volatile storage medium stores an operating system and computer-readable instructions, and the internal memory provides an environment for running the operating system and the computer-readable instructions in the non-volatile storage medium. The processor 200 provides computing and control capabilities for the device for detecting webpage tampering, and may implement the steps provided in any embodiments of the above-mentioned method for detecting webpage tampering.

On the basis of the foregoing embodiment, as a preferred implementation, the device for detecting webpage tampering further includes an input interface 300, a display unit 400, and a network port 500.

The input interface 300 is configured to obtain externally imported computer programs, parameters, and instructions, and store them in the memory under the control of the processor. The input interface 300 may be connected to an input device to receive parameters or instructions manually input by a user. The input device may be a touch layer covered on a display screen, a button, a trackball, or a touch pad provided on a terminal shell, or a keyboard, a touch pad, or a mouse.

The display unit 400 is configured to display data sent by the processor. The display unit 40 may be a display screen on a PC, a liquid crystal display screen or an electronic ink display screen.

The network port 500 is configured to communicate with an external terminal device. A communication technology used in the communication connection may be wired communication technology or wireless communication technology, such as mobile high-definition link technology (MHL), universal serial bus (USB), high-definition multimedia interface (HDMI), wireless fidelity technology (WiFi), Bluetooth communication technology, low-power Bluetooth communication technology, and communication technology based on IEEE802.11s.

The present disclosure also provides a computer-readable storage medium on which a computer program is stored, and when the computer program is executed by a processor, the steps provided in the above-mentioned embodiments are implemented. The storage medium may include: a U disk, a mobile hard disk, a read-only memory (Read-Only Memory, ROM), a random access memory (Random Access Memory, RAM), a magnetic disk, an optical disk or other media that can store program codes.

The above embodiments in this specification are described in a progressive manner. Each of the embodiments is mainly focused on describing its differences from other embodiments, and references may be made among these embodiments with respect to the same or similar portions among these embodiments.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. A method for detecting webpage tampering, comprising:
parsing a to-be-detected webpage to obtain tag information corresponding to the to-be-detected webpage, and taking the tag information as to-be-detected information;
extracting tampering feature information from the to-be-detected information; and
calculating the tampering feature information by using a deep learning model to obtain a tampering detection result of the to-be-detected webpage, wherein the deep learning model is obtained by pre-training on training samples corresponding to the tampering feature information.

2. The method according to claim 1, wherein before extracting the tampering feature information from the to-be-detected information, the method further comprises:
determining whether text information of the tag information includes a preset sensitive word;
if the text information includes the preset sensitive word, executing the step of extracting the tampering feature information from the to-be-detected information; and
if the text information does not include the preset sensitive word, determining that the tampering detection result of the to-be-detected webpage is the to-be-detected webpage being not tampered with.

3. The method according to claim 2, wherein determining whether the text information of the tag information includes the preset sensitive word comprises:
matching the text information of the tag information by using a preset rule to determine whether the tag information includes a word that meets the preset rule, wherein the preset rule corresponds to the preset sensitive word, and each preset rule includes a relationship between a core sensitive word and a core sensitive word of the preset sensitive word.

4. The method according to claim 3, wherein before matching the text information of the tag information by using the preset rule to determine whether the tag information includes the word that meets the preset rule, the method further comprises:
determining whether the tag information includes the core sensitive word;
if the tag information includes the core sensitive word, executing the step of matching the text information of the tag information by using the preset rule to determine whether the tag information includes the word that meets the preset rule; and
if the tag information does not include the core sensitive word, determining that the tampering detection result of the to-be-detected webpage is the to-be-detected webpage being not tampered with.

5. The method according to claim 1, wherein the tampering feature information comprises at least one of:
a result of sentiment analysis on text information of the tag information, a result of semantic analysis on text information of the tag information, a suspiciousness detection result of link information of the tag information, and an expert-presupposed tampering feature.

6. The method according to claim 1, wherein calculating the tampering feature information by using the deep learning model to obtain the tampering detection result of the to-be-detected webpage comprises:
calculating the tampering feature information by using at least two deep learning models as weak classifiers, to obtain calculation results corresponding to each of the weak classifiers; and
performing ensemble learning on the calculation results to obtain the tampering result of the to-be-detected webpage.

7. The method according to claim 6, wherein if there are at least two types of the tampering feature information, the at least two deep learning models comprise:
deep learning models corresponding to each type of the tampering feature information obtained by training on training samples of each type of the tampering feature information;
calculating the tampering feature information by using the at least two deep learning models as the weak classifiers to obtain the calculation results corresponding to each of the weak classifiers comprises:
calculating, by using the at least two deep learning models as the weak classifiers, the tampering feature information corresponding to each of the deep learning models, to obtain the calculation results.

8. The method according to claim 6, wherein if there is one type of the tampering feature information, the at least two deep learning models comprise:
deep learning models respectively corresponding to at least two training algorithms obtained by training on the training sample of the tampering feature information using the at least two training algorithms;
calculating the tampering feature information by using the at least two deep learning models as the weak classifiers to obtain the calculation results corresponding to each of the weak classifiers comprises:
calculating the same tampering feature information by using the at least two deep learning models as the weak classifiers to obtain the calculation results corresponding to each of the weak classifiers.

9. The method according to claim 1, wherein before extracting the tampering feature information from the to-be-detected information, the method further comprises:
obtaining a picture in the to-be-detected webpage; and
identifying text information in the picture, and taking the text information in the picture as the to-be-detected information.

10. The method according to claim 1, wherein before extracting the tampering feature information from the to-be-detected information, the method further comprises:
parsing and executing JavaScript code in the to-be-detected webpage to jump to a target page corresponding to the JavaScript code; and
parsing the target page to obtain target tag information corresponding to the target page, and taking the target tag information as the to-be-detected information.

11. A system for detecting webpage tampering, comprising:
a to-be-detected webpage parsing module configured to parse a to-be-detected webpage to obtain tag information corresponding to the to-be-detected webpage, and take the tag information as to-be-detected information;
a to-be-detected information feature extraction module configured to extract tampering feature information from the to-be-detected information; and
a calculation module configured to calculate the tampering feature information by using a deep learning model to obtain a tampering detection result of the to-be-detected webpage, wherein the deep learning model is obtained by pre-training on training samples corresponding to the tampering feature information.

12. The system according to claim 11, wherein the system further comprises:
a preset sensitive word detection module configured to determine whether text information of the tag information includes a preset sensitive word; if the text information includes the preset sensitive word, start the workflow corresponding to the to-be-detected information feature extraction module; if the text information does not include the preset sensitive word, determine that the tampering detection result of the to-be-detected webpage is the to-be-detected webpage being not tampered with.

13. The system according to claim 12, wherein the preset sensitive word detection module is configured to match the text information of the tag information by using a preset rule to determine whether the tag information includes a word that meets the preset rule,
wherein the preset rule corresponds to the preset sensitive word, and each preset rule includes a relationship between a core sensitive word and a core sensitive word of the preset sensitive word.

14. The system according to claim 13, wherein the system further comprises:
a core sensitive word detection module configured to determine whether the tag information includes the core sensitive word; if the tag information includes the core sensitive word, start the workflow corresponding to the preset sensitive word detection module; if the tag information does not include the core sensitive word, determine that the tampering detection result of the to-be-detected webpage is the to-be-detected webpage being not tampered with.

15. The system according to claim 11, wherein the calculation module comprises:
a calculation unit configured to calculate the tampering feature information by using at least two deep learning models as weak classifiers, to obtain calculation results corresponding to each of the weak classifiers; and
an ensemble learning unit configured to perform ensemble learn on the calculation results to obtain the tampering result of the to-be-detected webpage.

16. The system according to claim 15, wherein if there are at least two types of the tampering feature information, the at least two deep learning models comprises:
deep learning models corresponding to each type of the tampering feature information obtained by training on training samples of each type of the tampering feature information,
the calculation unit is configured to calculate, by using the at least two deep learning models as the weak classifiers, the tampering feature information corresponding to each of the deep learning models, to obtain the calculation results.

17. The system according to claim 15, wherein if there are at least two types of the tampering feature information, the at least two deep learning models comprise:
deep learning models respectively corresponding to at least two training algorithms obtained by training on the training sample of the tampering feature information using the at least two training algorithms,
the calculation unit is configured to calculate the same tampering feature information by using the at least two deep learning models as the weak classifiers to obtain the calculation results corresponding to each of the weak classifiers.

18. The system according to claim 11, wherein the system further comprises:
a picture obtaining module configured to obtain a picture in the to-be-detected webpage; and
a picture text information identification module configured to identify text information in the picture, and take the text information in the picture as the to-be-detected information.

19. A device for detecting webpage tampering, comprising:
a memory configured to store a computer program; and
a processor configured to execute the computer program to implement steps of the method for detecting webpage tampering according to any one of claims 1 to 10.

20. A computer-readable storage medium, wherein the computer-readable storage medium stores a computer program that, when executed by a processor, implements steps of the method for detecting webpage tampering according to any one of claims 1 to 10.
